# EUROPEAN PATENT SPECIFICATION

(11) **EP 3 274 571 B1**
(45) Date of publication and mention of the grant of the patent: **01.06.2022**
(21) Application number: 16712807.3
(22) Date of filing: 23.03.2016
(51) Int. Cl.: F01P 7/16, F16H 57/04

(54) **TRANSMISSION HEAT EXCHANGE SYSTEM**
GETRIEBEWÄRMEAUSTAUSCHSYSTEM
SYSTÈME D'ÉCHANGE DE CHALEUR POUR TRANSMISSION

(30) Priority: 24.03.2015 GB 201504977
(43) Date of publication of application: 31.01.2018
(73) Proprietor: Jaguar Land Rover Limited, Coventry, Warwickshire CV3 4LF (GB)
(72) Inventor: HUTCHINS, William, Coventry Warwickshire CV3 4LF (GB)
(74) Representative: Holmes, Matthew William
(86) International application number: PCT/EP2016/056437
(87) International publication number: WO 2016/151040

(56) References cited:
- WO-A1-2010/038919
- WO-A1-2016/016063
- WO-A2-2004/063543
- DE-A1- 10 301 448
- FR-A1- 2 956 158

## Description

### TECHNICAL FIELD

The present disclosure relates to a transmission heat exchange system. Aspects of the invention relate to an engine and a vehicle comprising such.

### BACKGROUND

The management of heat in a vehicle is a complex problem, especially when the vehicle is starting. Many of the systems in a vehicle have an ideal operating temperature, and a vehicle at start up is often cold, with ambient temperatures far below the ideal operating range of the vehicle components. On top of this, the vehicle cabin may also be cold, and the driver will often wish to warm the cabin, and themselves, as quickly as possible.

Internal combustion engines generate heat as a by-product of their operation. This heat can be used to warm both the engine components and the vehicle cabin to their ideal temperatures. However, as the components continue to work they may become overheated, so cooling is often essential.

A vehicle transmission is an example of a vehicle component with an ideal operating temperature. In order to protect the transmission from wear, the transmission is provided with lubricant, which usually primarily comprises an oil. The transmission lubricant functions best at a particular range of temperatures. Below and above these temperatures, the transmission may suffer unnecessary wear as it works.

WO2010038919 describes a regular temperature system for powertrain of vehicle and a control method therefor. This invention comprises; a heating unit which heats the passenger room of the vehicle with the cooling water from the engine; a circulation line which circulates the cooling water using a pump; a cooling line which cools the cooling water with a radiator and returns the cooling water to the engine; a cooling water valve which controls the flow of the cooling water discharged from the engine to the cooling line, circulation line or the heating unit; and a transmission temperature control unit which regulates the temperature of transmission at optimal level by heating or cooling the transmission with the cooling water cooled with the radiator or heated in the engine. The system in accordance with this invention can heat or cool transmission as desired.

DE10301448 describes a transmission heat exchange system according to the preamble of claim 1.

The temperature of the transmission lubricant is maintained by a heat exchanger, commonly called a transmission oil cooler. The transmission oil cooler can assist in heating the transmission lubricant if it is too cold, and cooling it if it is too hot. When the transmission oil cooler is used to cool the transmission, high temperature transmission fluid is pumped through one side of the heat exchanger, while lower temperature coolant is pumped through the other side of the heat exchanger. The two fluids do not intermix, but are allowed into close proximity so that thermal energy can be transferred from the transmission fluid to the coolant. The cooled transmission fluid is then returned to the transmission, where it helps to cool the other components of the transmission.

The coolant used in the transmission oil cooler is also used to cool or heat the other components of the vehicle, such as the cabin heater. Therefore it is desirable to manage the demands of the transmission and other components such as the cabin heater intelligently so that the engine operates at its respective ideal operating temperature.

### SUMMARY OF THE INVENTION

Various aspects and features of the present invention are defined in the claims.

In particular, in according with one aspect of the present invention, there is provided a transmission heat exchange system for an engine comprising:
a transmission oil cooler (9);
a pump (4);
a systems valve (5) for receiving coolant, the systems valve (5) comprising at least a first input, a first output and a second output, the systems valve (5) being arranged to receive coolant at the first input of the systems valve and to provide that coolant to the first and second outputs of the systems valve, the amount of coolant provided to the first and second outputs of the systems valve being according to the condition of the systems valve (5); and
   a transmission valve (8) for receiving coolant, the transmission valve (8) comprising at least a first input, a second input and a first output, the transmission valve (8) being arranged to receive coolant at the first and second inputs of the transmission valve (8) in a ratio according to the condition of the valve and to provide that coolant to the first output of the transmission valve (8);
   wherein the pump (4) is arranged to supply coolant to the first input of the systems valve (5) and the second input of the transmission valve (8), the first output of the systems valve (5) being arranged to supply coolant to the first input of the transmission valve (8); and
   wherein the first output of the transmission valve (8) is arranged to supply coolant to the transmission oil cooler (9), and the second output of the systems valve (5) is arranged to supply coolant to a further engine component,
   wherein the second input of the transmission valve (8) is arranged to receive coolant from a radiator (3), the pump (4) being arranged to supply coolant to the radiator (3),
   wherein the first input of the systems valve (5) is arranged to receive coolant which has been heated by an internal combustion engine (1),
   wherein the further engine component is a cabin heater (7),
   wherein the systems valve (5) comprises a first temperature responsive component, and wherein the amount of coolant being provided to the first and second outputs of the systems valve (5) is determined by the temperature of the first temperature responsive component,
   wherein the transmission valve (8) comprises a second temperature responsive component, the transmission valve (8) being arranged to receive coolant at the first and second inputs of the transmission valve (8) in a ratio determined by the temperature of the second temperature responsive component, and wherein coolant exiting the transmission oil cooler (9) is arranged to flow near to the transmission valve (8), such that the temperature of the second temperature responsive component is at least partly controlled by the temperature of the coolant exiting the transmission oil cooler (9).

In accordance with an implementation, there is provided a transmission heat exchange system for ar engine. The system comprises a transmission oil cooler. The system comprises a pump. The system comprises a systems valve for receiving coolant. The systems valve comprises at least a first input, a first output and a second output. The systems valve is arranged to receive coolant at the first input of the systems valve and to provide that coolant to the first and second outputs of the systems valve. The amount of coolant provided to the first and second outputs of the systems valve is according to the condition of the systems valve.

The system comprises a transmission valve for receiving coolant. The transmission valve comprises at least a first input, a second input and a first output. The transmission valve is arranged to receive coolant at the first and second inputs of the transmission valve in a ratio according to the condition of the valve and to provide that coolant to the first output of the transmission valve.

The pump is arranged to supply coolant to the first input of the systems valve and the second input of the transmission valve. The first output of the systems valve is arranged to supply coolant to the first input of the transmission valve.

The first output of the transmission valve is arranged to supply coolant to the transmission oil cooler, and the second output of the systems valve is arranged to supply coolant to a further engine component.

In some embodiments, the first and second valves therefore provide inputs which can accept coolant from other sources in the heat exchange system, those inputs being the first input of the systems valve and the second input of the transmission valve. The first and second valves also provide outputs which can supply coolant to other destinations in the heat exchange system, those outputs being the second output of the systems valve and the first output of the transmission valve. Coolant supplied to the systems valve can be supplied directly to the second output of the systems valve, which can then be connected to critical systems within the heat exchange system to ensure that they receive a supply whenever one is needed. Meanwhile, the transmission valve may receive and mix coolant from two different sources, which can also be of two different temperatures, so that the transmission valve can mix the sources of coolant to provide coolant at a desired temperature for the transmission oil cooler.

Typically, the heat exchange system is a circuit, in which coolant is eventually returned to the pump to be recirculated through the other components.

It may be that the heat exchange system is arranged to provide coolant to the first input of the systems valve which is at a higher temperature than the coolant provided to the second input of the transmission valve. It may be that the second input of the transmission valve is arranged to receive coolant from a radiator, the pump being arranged to supply coolant to the radiator. The radiator may be arranged to reduce the temperature of coolant flowing through the radiator. It may be that the first input of the systems valve is arranged to receive coolant which has been heated by an engine component, such as an electric motor or other motive power unit. It may be that the first input of the systems valve is arranged to receive coolant which has been heated by an internal combustion engine, for example by being put in close thermal contact with a heat transferring or producing component such as a cylinder wall.

The further engine component is a cabin heater. Cabin heaters are important for user comfort, and maintaining a flow of coolant to the cabin heater can help to improve the experience of using a device such as a vehicle to which the engine is attached. The condition of the systems valve depends upon the temperature of the systems valve. The condition of the transmission valve depends upon the temperature of the transmission valve. The systems valve comprises a first temperature responsive component. The amount of coolant being provided to the first and second outputs of the systems valve is determined by the temperature of the first temperature responsive component.

The transmission valve comprises a second temperature responsive component. The transmission valve is arranged to receive coolant at the first and second inputs of the transmission valve in a ratio determined by the temperature of the second temperature responsive component.

It may be that at least one temperature responsive component comprises a first material which changes volume with temperature, the first material being arranged to change the condition of a valve when it changes volume. The first material typically comprises wax, since this is an affordable temperature responsive material whose characteristics are easily adjusted, by changing the ingredients in the wax, to provide a desired temperature response. Alternatively, a temperature responsive component may be a temperature measuring device such as an electronic device which is arranged to provide temperature measurements to a control unit. The control unit may then be arranged to control the systems valve, the transmission valve or both, to assume a condition based upon the temperature measured by the temperature measuring device. It may be that the condition of the systems valve depends upon a first signal from a control unit. It may be that the condition of the transmission valve depends upon a second signal from a control unit.

It may be that at least one temperature responsive component further comprises a heater, such as an electrical resistance heater. Activating the heater will cause the temperature responsive component to heat up.

Coolant exiting the transmission oil cooler is arranged to flow near to the transmission valve, such that the temperature of the second temperature responsive component is at least partly controlled by the temperature of the coolant exiting the transmission oil cooler. It may be that coolant exiting the transmission oil cooler is arranged to flow over the transmission valve. It may be that the temperature of the second temperature responsive component is directly controlled by the temperature of the transmission valve in this way.

Alternatively, a temperature measuring device such as the one described above may be provided in, on or near the transmission, such that a control unit would receive a measured temperature indicative of the transmission oil temperature, and control the condition of the second valve as appropriate.

It may be that the systems valve is arranged such that the systems valve can prevent coolant from flowing through the second output of the systems valve. Typically, the systems valve is arranged such that the systems valve will prevent coolant from flowing through the second output of the systems valve at a predetermined range of temperatures. This range of temperatures may comprise all temperatures over a threshold temperature. This will prevent a flow of coolant to the further engine component when certain temperatures are reached. This would help to protect the further engine component from overheating due to heat carried with the coolant. This would also help to reduce coolant flow if it is no longer necessary; for example because the engine has reached high running temperatures.

It may be that the transmission valve is arranged such that the transmission valve can reduce the rate of flow of coolant through the first input of the transmission valve to a predetermined minimum. This minimum may be greater than zero, such that the transmission valve cannot completely stop the flow of coolant through the first input of the transmission valve. This would ensure a minimum flow rate through the transmission oil cooler. This can be advantageous, since this minimum flow can help to determine the temperature of the transmission oil cooler, in particular in those embodiments where the temperature of the transmission oil is determined by measuring the temperature of the coolant exiting the transmission oil cooler.

It may be that the transmission valve and/or the systems valve comprise a heater. The heater may be an electric heater, such as an electric coil heater. The heater may be controlled by a control unit. The control unit may be arranged to heat the transmission valve in response to a signal indicating that the transmission is about to heat up, for example because of a heavy load upon the transmission.

A second aspect of the invention provides an engine comprising a heat exchange system as described above.

A third aspect of the invention provides a vehicle comprising an engine as described above.

Within the scope of this application it is expressly intended that the various aspects, embodiments, examples and alternatives set out in the preceding paragraphs, in the claims and/or in the following description and drawings, and in particular the individual features thereof, may be taken independently or in any combination. That is, all embodiments and/or features of any embodiment can be combined in any way and/or combination, unless such features are incompatible. The applicant reserves the right to change any originally filed claim or file any new claim accordingly, including the right to amend any originally filed claim to depend from and/or incorporate any feature of any other claim although not originally claimed in that manner.

### BRIEF DESCRIPTION OF THE DRAWINGS

Embodiments of the invention are further described hereinafter, by way of example only, with reference to the accompanying drawings, in which:
Figures 1 shows a first internal combustion engine;
Figures 2 to 6 show a part of the internal combustion engine of Figure 1 in various different states; and
Figure 7 shows a second internal combustion engine.

### DETAILED DESCRIPTION

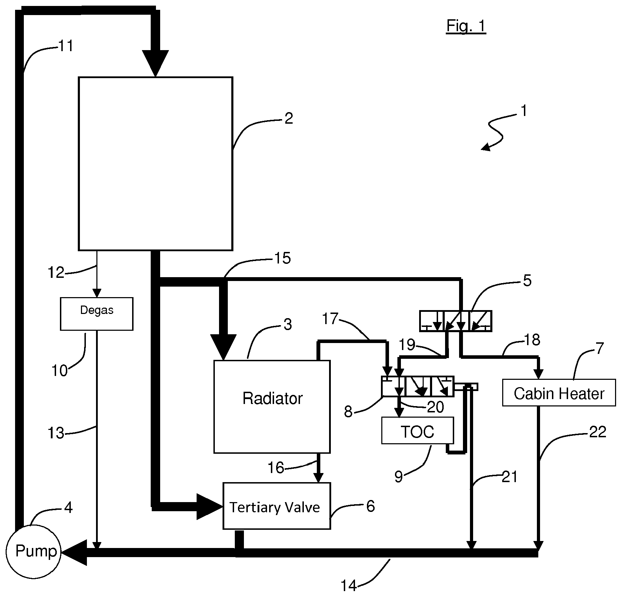

Figure 1 shows a first internal combustion engine 1. The engine 1 comprises cylinders 2 and a radiator 3. The engine 1 further comprises a network of pipes which convey coolant around the first engine 1 as necessary.

Coolant is circulated by a pump 4, through a first pipe 11 to the cylinders 2. When near the cylinders 2, the coolant absorbs excess heat, cooling the cylinders. A small percentage of the coolant is then allowed to pass through a second pipe 12 to a degas tank 10. The degas tank 10 is arranged to allow trapped air to escape from the coolant system. From the degas tank 10, the coolant passes to a third pipe 13, and from there into a fourth pipe 14 which connects with the pump 4, completing the circuit.

However, in this circuit, the temperature of the coolant is not regulated, and the coolant is not used to regulate the temperature of any other vehicle components. Therefore the majority of the coolant is directed through a fifth pipe 15. The fifth pipe 15 splits, supplying coolant to the radiator 3, a systems valve 5, and a tertiary valve 6.

Coolant which flows through the radiator 3 is cooled by passing lower temperature air through the radiator 3. A pipe 16 allows some of the coolant from the radiator 3 to pass to the tertiary valve 6.

Hence, the tertiary valve 6 receives coolant both from the radiator 3 and directly from the cylinders 2. The tertiary valve 6 is a mixing valve, which is designed to take coolant from its two inputs and provide coolant of a desired temperature to the fourth pipe 14. This is possible because, in typical operation, the coolant from the cylinders 2 is much hotter than the coolant from the radiator 3. The condition of the tertiary valve 6 dictates what ratio of coolant mass flow rate, between the cylinders 2 and the radiator 3, is allowed into the fourth pipe 14.

Inside the tertiary valve 6 is a wax component which increases in volume when heated. As the wax component swells, a divider inside the tertiary valve 6 moves such that more coolant is allowed from pipe 16 into pipe 14, and less coolant is allowed to flow directly from pipe 15 into pipe 14 through the tertiary valve 6. Hence, as the tertiary valve heats up, more coolant of a lower temperature will flow through the tertiary valve 6, therefore tending to cool the tertiary valve.

Similarly, the wax component in the tertiary valve 6 shrinks when cooled. As the wax component shrinks, the divider inside the tertiary valve 6 moves such that less coolant is allowed from pipe 16 into pipe 14, and more coolant is allowed to flow directly from pipe 15 into pipe 14 through the tertiary valve 6. Hence, as the tertiary valve cools down, more coolant of a higher temperature will flow through the tertiary valve 6, , therefore tending to heat the tertiary valve. In this way, the tertiary valve is self-regulating, maintaining its temperature and the temperature of the coolant flowing out of it, within predetermined bounds.

As such, the tertiary valve helps to maintain the coolant in the fourth pipe 14 at a constant temperature which is suitable for cooling and regulating the temperature of the cylinders 2. There are other sources supplying the fourth pipe 14, which are illustrated in Figure 1 and discussed below, and which may also affect the temperature of the coolant in the fourth pipe 14. However, the mass flow rate of coolant being directed through the tertiary valve is sufficient to ensure that the behaviour of the valve has the predominant effect on the coolant temperature in the fourth pipe 14.

The radiator 3 also provides a flow of coolant to a transmission valve 8 through a seventh pipe 17. The systems valve 5 controls the flow of coolant to a cabin heater 7 through an eighth pipe 18, and to the transmission valve 8 through a ninth pipe 19. Coolant flows from the transmission valve 8 to a transmission oil cooler 9 through a tenth pipe 20. The actions of the systems and transmission valves are described in greater detail below.

Coolant in the cabin heater 7 is used to warm air, that air then being circulated in the vehicle cabin in order to keep the vehicle's driver and other occupants warm. Coolant in the transmission oil cooler 9 is put into close thermal proximity with the oil of the transmission, so that the temperature of the transmission oil can be regulated. Coolant in the transmission oil cooler 9 then flows through an eleventh pipe 21 to the fourth pipe 14, and coolant in the cabin heater flows through a twelfth pipe 22 to the fourth pipe 14. Therefore, all the coolant eventually returns to the pump 4 to be circulated again.

Both the systems valve 5 and the transmission valve 8 are temperature responsive wax valves, similar to the tertiary valve 6 described above. The systems valve 5 comprises an input, which receives coolant from the fifth pipe 15, and two outputs which are connected to the eighth pipe 18 and the ninth pipe 19 respectively. The relative proportion of coolant which is supplied to each output by the systems valve 5 is determined by the position of a divider within the systems valve. In a first state, the divider is positioned so as to block flow to the ninth pipe 19. In a second state, the divider moves so that coolant can flow to both the eighth pipe 18 and the ninth pipe 19. As the divider continues to move, more coolant is provided to the ninth pipe 19, and less coolant is provided to the eighth pipe 18. When the systems valve is in a third state, the divider is positioned so as to block flow to the eighth pipe 18, and so all the coolant flowing through the systems valve 5 then goes to the ninth pipe 19.

These three states are illustrated, diagrammatically, on the illustration of the systems valve 5 in Figure 1. As with the other valve illustrated in Figure 1, the systems valve 5 is illustrated with a "digital" illustration showing three possible states. This is for illustration purposes only, since the valve is an "analogue" device which gives a variable response dependent upon its temperature.

The systems valve 5 comprises a wax component which expands and contracts with changing temperature. The wax component of the systems valve 5 is arranged such that as the systems valve heats up, warming the wax component in the systems valve 5, the amount of coolant flowing to the eighth pipe 18 decreases, and the amount of coolant flowing to the ninth pipe 19 increases. Then, if the systems valve cools, the amount of coolant flowing to the ninth pipe 19 decreases and the amount of coolant flowing to the eighth pipe 18 increases.

The transmission valve 8, in contrast, comprises two inputs and an output. The two inputs of transmission valve 8 receive coolant from the seventh pipe 17 and the ninth pipe 19 respectively. The output of the transmission valve 8 provides all the coolant flowing through the transmission valve 8 to the tenth pipe 20. The relative proportion of coolant which is taken from each input by the transmission valve 8 is determined by the position of a divider within the transmission valve. In a first state, the divider is positioned so as to block flow from the seventh pipe 17 almost completely. In a second state, the divider moves so that coolant can flow from both the seventh pipe 17 and the ninth pipe 19. As the divider continues to move, more coolant is taken from the seventh pipe 17, and less coolant is taken from the ninth pipe 19. When the systems valve is in a third state, the divider is positioned so as to block flow from the ninth pipe 19, and so all the coolant flowing through the transmission valve 5 then comes from the seventh pipe 17. Again, these three states are illustrated, diagrammatically, on the illustration of the transmission valve 8 in Figure 1.

The transmission valve 8 also comprises a wax component which expands and contracts with changing temperature. The wax component of the transmission valve 8 is arranged such that as the transmission valve heats up, warming the wax component in the transmission valve 8, the amount of coolant flowing from the ninth pipe 19 decreases, and the amount of coolant flowing from the seventh pipe 17 increases. Then, as the transmission valve cools, the amount of coolant flowing from the seventh pipe 17 decreases and the amount of coolant flowing from the ninth pipe 19 increases.

The eleventh pipe 21 is arranged to flow through the transmission valve 8, as is illustrated in figure 1. The transmission valve 8 is arranged such that 85% the wax component of the valve is surrounded by coolant from the eleventh pipe 21. As such, this 85% is exposed to coolant which is the same temperature as the transmission oil cooler 9. The remaining 15% of the wax in the transmission valve 8 is surrounded by coolant from the seventh pipe 17. As such, this 15% is exposed to coolant which is the same temperature as the radiator 3..

As such, the state of the transmission valve is dictated primarily by the temperature of the transmission oil cooler 9.

The state of the transmission valve may also be affected by the temperature of other nearby engine components.

Hence as the transmission warms up, the transmission valve 8 tends to move from the first state to the second state to the third state. In order to encourage this process, the transmission valve is arranged such that the flow of coolant from the seventh pipe 17 through the transmission oil cooler 9 is never completely stopped. When the transmission valve 8 is in a first state, flow from the seventh pipe 17 is almost completely stopped, but a small bleed flow will still pass from the seventh pipe 17 through the transmission valve 8, the transmission oil cooler 9 and into the eleventh pipe 21. Hence there is always at least a small flow through the eleventh pipe 21. This flow through the eleventh pipe 21 will cause the transmission valve 8 to heat up when the transmission heats up, even if no other coolant is flowing through the transmission valve 8.

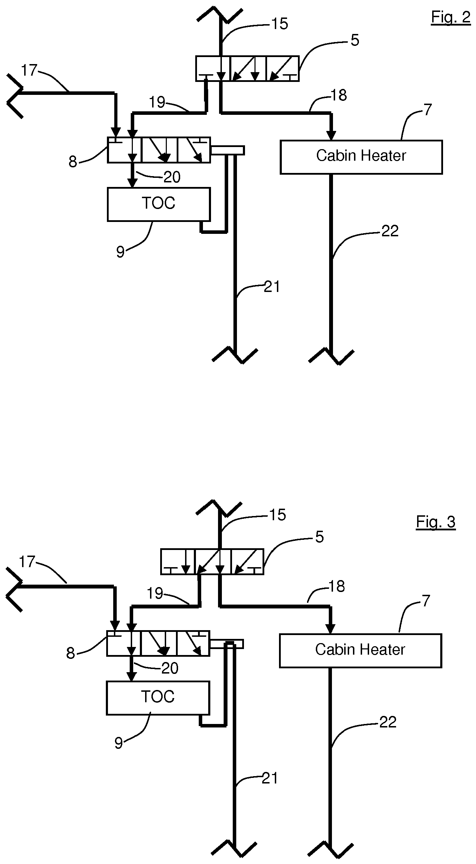

The systems valve 5 and the transmission valve 8 therefore control the flow of coolant through the transmission oil cooler and the cabin heater. Turning to figure 2, the relationship between the systems valve 5, the transmission valve 8, the cabin heater 7 and the transmission oil cooler 9 from Figure 1 is shown in an expanded view. In Figure 2, the engine is in a state that would be expected at start up, when the engine is at its coldest. The systems valve 5 is therefore in its first state. Similarly, the transmission valve 8 is also in its first state. Therefore coolant from the fifth pipe 15 is free to flow to the cabin heater 7 through the systems valve 5. Initially, this coolant will only be at ambient temperatures, but as the engine works the cylinders 2 will begin to heat up, so that the temperature of the coolant in the fifth pipe 15 will increase. Hence heated coolant will flow to the cabin heater, and can be used to warm air in the vehicle cabin as required by the user.

The transmission valve 8 is also in its first state. In this first state, only the small bleed flow of coolant is allowed from the seventh pipe 17 through the transmission valve 8 to the transmission oil cooler 9. Although any coolant in the ninth pipe 19 would be able to pass through the transmission valve 8, the systems valve 5 prevents coolant from reaching the ninth pipe 19, so the bleed flow is the only movement of coolant through the transmission valve 8. At this early stage, the transmission is cool, and does not need cooling.

As the engine continues to heat up, the heat exchange system moves to the state shown in Figure 3. Here, the engine has been working for some time, and hence the temperature of the cylinders 2 has risen further. Hence the temperature of the coolant in the fifth pipe 15 has risen, which in turn increases the temperature of the systems valve 5. Hence, the systems valve 5 has moved to its second state, such that coolant can flow through the eighth pipe 18 and the ninth pipe 19. The cabin heater 7 is therefore still receiving heated coolant, which can be used to heat the cabin. In addition, heated coolant can flow from the fifth pipe 15 through the systems valve 5 to the ninth pipe 19. Since the transmission valve 8 is still in a first state, the heated coolant in the ninth pipe 19 is then free to flow through the transmission valve 8 to the transmission oil cooler 9. The heated coolant will then tend to heat the transmission. This is desirable when the transmission is beneath its ideal operating temperature, as it will often be shortly after start up.

In this way, the engine shown in Figure 1 will preferentially supply heated coolant to the cabin heater shortly after start up, but then provide coolant to heat the transmission once the cabin has had an opportunity to warm up. This maximises the comfort of the driver and other occupants of the vehicle cabin, while also reducing wear and tear on the transmission resulting from use at low temperatures.

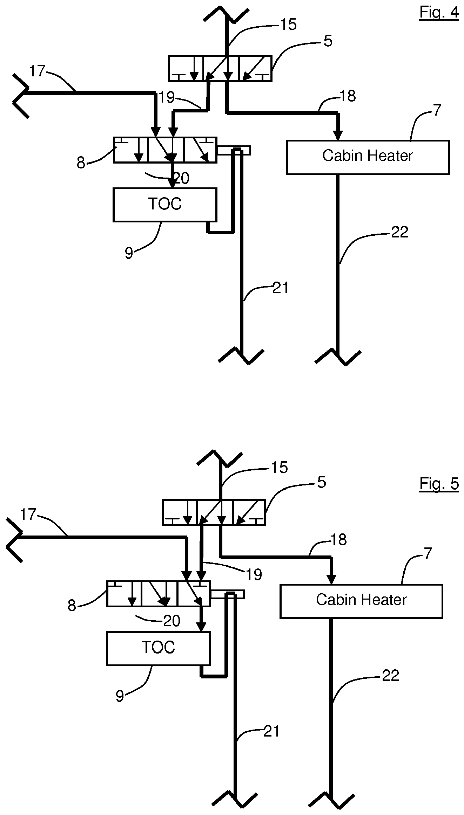

Typically, as the engine continues to work, it will move into the state in Figure 4. In Figure 4, the systems and transmission valves 5, 8 continue to supply coolant to the cabin heater 7 and the transmission oil cooler 9. However, as the transmission heats up, the temperature of the coolant flowing through the eleventh pipe 21 will continue to rise. This heats up the wax element of the transmission valve 8 and causes the transmission valve 8 to move into its second state as shown in Figure 4. Here, a larger amount of the colder coolant from the radiator 3 is also allowed to flow through the transmission valve 8 to the transmission oil cooler 9. In this way the transmission valve responds continuously to the changing temperature of the transmission, providing hotter or colder coolant depending upon the temperature of the transmission such that the transmission is maintained within a desired temperature range.

If the transmission is working hard enough that it generates a great deal of excess heat, which can happen for example if the vehicle is caught in heavy traffic and must constantly adjust its speed, then the heat exchange system may move to the state shown in Figure 5. In Figure 5, the transmission valve 8 has shut off the flow of hotter coolant from the systems valve 5, and is only supplying colder coolant from the radiator 3 to the transmission oil cooler 9.

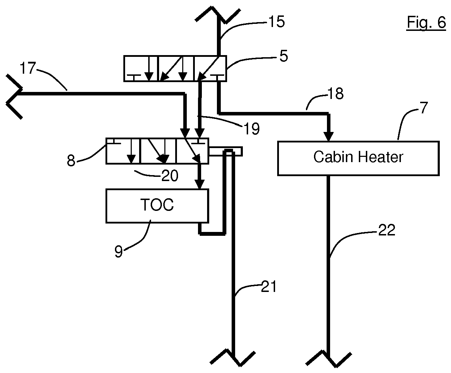

If the ambient temperatures are high, or if the engine is very warm due to continuous work over an extended period of time, then the systems valve 5 may move to its third state as illustrated in Figure 6. In this state no coolant flows to the cabin heater. This can be advantageous since in these circumstances the cabin is unlikely to need further heating, and any necessary heating can be supplied without the need to further heat the coolant. This reduces the number of routes open to the coolant. Since the pump works to circulate coolant around the entire coolant system, closing one branch of the system reduces the total volume of coolant which must be circulated to move a desired amount of coolant through the radiator, and hence dispose of a desired quantity of excess heat. As such, stopping the flow through the cabin heater tends to reduce the total amount of coolant that must be circulated by the pump 4 in order to maintain the cylinders 2 and the transmission oil cooler 9 at their respective desired temperatures. It is estimated that as much as 20% less pump flow will be required to provide the same outcome. This reduces the energy consumed by the pump, helping the vehicle operate more efficiently. When the flow is also going through the cabin heater, it is estimated that the pump consumes 60% more energy than when the flow is not allowed through the cabin heater.

In total, there are nine configurations of the systems and transmission valves 5, 8 available, with many small variations possible whenever the systems valve 5 or the transmission valve 8 is in their respective second state. In general, the cabin heater 7 can be supplied with coolant by the systems valve 5 until it is no longer necessary, while the transmission valve 8 ensures that the transmission oil cooler 9 does not overheat, and also assists in warming the transmission oil cooler 9 when this is allowed by the systems valve 5. Table 1 is a list of all the combinations of systems valve 5 and transmission valve 8 statuses, together with a brief description of the coolant being provided to the cabin heater 7 or the transmission oil cooler 9 in each case. Hot coolant is coolant from the cylinders through the fifth pipe 15, while cold coolant first passes through the radiator 3 in order to be cooled before being supplied to the systems and transmission valves 5, 8.

**Table 1**

| Systems Valve State | Transmission valve State | Cabin Heater | Transmission Oil Cooler |
|---|---|---|---|
| first | first | Hot coolant | Bleed of cold coolant |
| first | second | Hot coolant | Cold coolant |
| first | third | Hot coolant | Cold coolant |
| second | first | Hot coolant | Hot coolant with a bleed of cold coolant |
| second | second | Hot coolant | Hot and cold coolant |
| second | third | Hot coolant | Cold coolant |
| third | first | Nothing | Hot coolant with a bleed of cold coolant |
| third | second | Nothing | Hot and cold coolant |
| third | third | Nothing | Cold coolant |

In this way, while the systems valve ensures that the cabin heater 7 is provided with heat in cold conditions, it does not influence the supply of comparatively cold coolant from the radiator 3 to the transmission oil cooler 9. This is governed entirely by the transmission valve 8. Therefore, in this arrangement the transmission oil cooler 9 is protected from overheating without compromising passenger comfort.

Since 15% of the wax in the transmission valve 8 exposed to the coolant in the seventh pipe 17, the state of the wax and hence the state of the transmission valve 8 also depends upon the temperature of the radiator 3. If the coolant coming from the radiator 3 is at a temperature of Y degrees, then the coolant coming from the transmission oil cooler 9 must reach a temperature of X degrees to change the state of the valve from that shown in Figure 1. As Y increases, X decreases, due to the 15% of the wax exposed to the coolant in the seventh pipe 17. As such, as the radiator gets hotter, the transmission valve 8 responds to lower temperatures of coolant from the transmission oil cooler 9. This is desirable because,. where the coolant from the radiator 3 is hotter, it is desirable to begin cooling the transmission oil cooler 9 sooner, since the hotter coolant from the radiator will be less effective at cooling the transmission oil cooler 9.

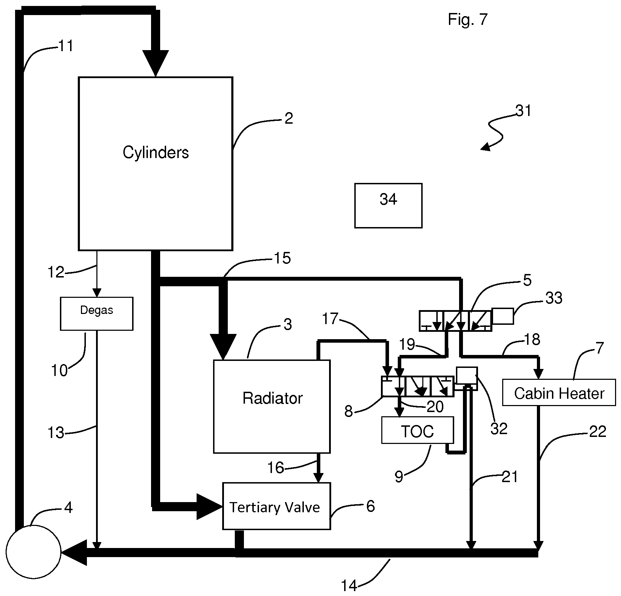

Figure 7 shows a second internal combustion engine 31. The second internal combustion engine has all the same components as the first internal combustion engine 1, and like components are identified with like numerals on in the diagram for easy reference. The second internal combustion engine further comprises a transmission coil heater 32 and a systems coil heater 33. The transmission coil heater 32 is located on the transmission valve 8, and the systems coil heater 33 is located on the systems valve 5. Both of the coil heaters 32, 33 are controlled by a control unit 34.

In use, the control unit can control the coil heaters 32, 33 to heat up, which in turn will heat up their respective valve 8, 5. In this way, the control unit can control some of the actions of the valves. For example, if the control unit anticipates a high load upon the transmission, it may activate the transmission coil heater 32 in order to heat up the transmission valve 8. This will cause the transmission valve 8 to move into one of the states shown in Figure 4 or Figure 5, whereby coolant is allowed to flow from the radiator 3 through the transmission oil cooler 9. This provides cooling to the transmission before it has a chance to become heated, maintaining the temperature of the transmission within a desired range.

The control unit may anticipate heavy load upon the transmission because of geographical information provided by a navigation system (the vehicle may be in hilly terrain or heavy traffic, for example), or because of changes in the engine state (for example if the vehicle has just been switched into an off-road or city driving mode).

In a further example, the control unit may activate the systems coil heater 33 in order to heat up the systems valve 5. This may be done if the control unit anticipates that the cabin heater is not needed, for example if the vehicles occupants have set the controls of the vehicle to cool the cabin rather than to heat it. Heating the systems valve 5 puts the valve into the state shown in Figure 6, wherein the systems valve 5 will provide hot coolant to the transmission oil cooler if it is needed, and stop the flow of coolant through the cabin heater where it is not needed.

Throughout the description and claims of this specification, the words "comprise" and "contain" and variations of them mean "including but not limited to", and they are not intended to (and do not) exclude other moieties, additives, components, integers or steps. Throughout the description and claims of this specification, the singular encompasses the plural unless the context otherwise requires. In particular, where the indefinite article is used, the specification is to be understood as contemplating plurality as well as singularity, unless the context requires otherwise.

## Claims

1. A transmission heat exchange system for an engine comprising:
a transmission oil cooler (9);
a pump (4);
a systems valve (5) for receiving coolant, the systems valve (5) comprising at least a first input, a first output and a second output, the systems valve (5) being arranged to receive coolant at the first input of the systems valve and to provide that coolant to the first and second outputs of the systems valve, the amount of coolant provided to the first and second outputs of the systems valve being according to the condition of the systems valve (5); and
a transmission valve (8) for receiving coolant, the transmission valve (8) comprising at least a first input, a second input and a first output, the transmission valve (8) being arranged to receive coolant at the first and second inputs of the transmission valve (8) in a ratio according to the condition of the valve and to provide that coolant to the first output of the transmission valve (8);
wherein the pump (4) is arranged to supply coolant to the first input of the systems valve (5) and the second input of the transmission valve (8), the first output of the systems valve (5) being arranged to supply coolant to the first input of the transmission valve (8); and
wherein the first output of the transmission valve (8) is arranged to supply coolant to the transmission oil cooler (9), and the second output of the systems valve (5) is arranged to supply coolant to a further engine component,
wherein the second input of the transmission valve (8) is arranged to receive coolant from a radiator (3), the pump (4) being arranged to supply coolant to the radiator (3),
wherein the first input of the systems valve (5) is arranged to receive coolant which has been heated by an internal combustion engine (1),
wherein the systems valve (5) comprises a first temperature responsive component, and wherein the amount of coolant being provided to the first and second outputs of the systems valve (5) is determined by the temperature of the first temperature responsive component,
wherein the transmission valve (8) comprises a second temperature responsive component, the transmission valve (8) being arranged to receive coolant at the first and second inputs of the transmission valve (8) in a ratio determined by the temperature of the second temperature responsive component, and
wherein coolant exiting the transmission oil cooler (9) is arranged to flow near to the transmission valve (8), such that the temperature of the second temperature responsive component is at least partly controlled by the temperature of the coolant exiting the transmission oil cooler (9),
**characterised in that** the further engine component is a cabin heater (7).

2. A transmission heat exchange system according to claim 1, wherein at least one temperature responsive component comprises a first material which changes volume with temperature, the first material being arranged to change the condition of a valve when it changes volume.

3. A transmission heat exchange system as claimed in claim 2, wherein the first material comprises a wax.

4. A transmission heat exchange system as claimed in any preceding claim, wherein the systems valve (5) is arranged such that the systems valve (5) can prevent coolant from flowing through the second output of the systems valve.

5. A transmission heat exchange system according to claim 4, wherein the systems valve (5) is arranged such that the systems valve will prevent coolant from flowing through the second output of the systems valve at a predetermined range of temperatures.

6. A transmission heat exchange system as claimed in any preceding claim, wherein the transmission valve (8) is arranged such that the transmission valve (8) can reduce the rate of flow of coolant through the first input of the transmission valve (8) to a predetermined minimum.

7. A transmission heat exchange system as claimed in any preceding claim, wherein the transmission valve and/or the systems valve comprise a heater.

8. An engine (1) comprising a transmission heat exchange system according to any preceding claim.

9. A vehicle comprising an engine according to claim 8.

## Patentansprüche

1. Getriebewärmetauschsystem für einen Motor, das Folgendes umfasst:
einen Getriebeölkühler (9);
eine Pumpe (4);
ein Systemventil (5) zum Aufnehmen von Kühlmittel, wobei das Systemventil (5) wenigstens einen ersten Eingang, einen ersten Ausgang und einen zweiten Ausgang umfasst, wobei das Systemventil (5) angeordnet ist, um Kühlmittel an dem ersten Eingang des Systemventils aufzunehmen und dieses Kühlmittel dem ersten und dem zweiten Ausgang des Systemventils bereitzustellen, wobei die Kühlmittelmenge, die dem ersten und dem zweiten Ausgang des Systemventils bereitgestellt wird, gemäß dem Zustand des Systemventils (5) ist; und
ein Getriebeventil (8) zum Aufnehmen von Kühlmittel, wobei das Getriebeventil (8) wenigstens einen ersten Eingang, einen zweiten Eingang und einen ersten Ausgang umfasst, wobei das Getriebeventil (8) angeordnet ist, um Kühlmittel an dem ersten und dem zweiten Eingang des Getriebeventils (8) in einem Verhältnis gemäß dem Zustand des Ventils aufzunehmen und um dieses Kühlmittel dem ersten Ausgang des Getriebeventils (8) bereitzustellen;
wobei die Pumpe (4) angeordnet ist, um dem ersten Eingang des Systemventils (5) und dem zweiten Eingang des Getriebeventils (8) Kühlmittel zuzuführen, wobei der erste Ausgang des Systemventils (5) angeordnet ist, um dem ersten Eingang des Getriebeventils (8) Kühlmittel zuzuführen; und
wobei der erste Ausgang des Getriebeventils (8) angeordnet ist, um dem Getriebeölkühler (9) Kühlmittel zuzuführen, und der zweite Ausgang des Systemventils (5) angeordnet ist, um einer weiteren Motorkomponente Kühlmittel zuzuführen,
wobei der zweite Eingang des Getriebeventils (8) angeordnet ist, um Kühlmittel von einem Kühler (3) aufzunehmen, wobei die Pumpe (4) angeordnet ist, um dem Kühler (3) Kühlmittel zuzuführen,
wobei der erste Eingang des Systemventils (5) angeordnet ist, um Kühlmittel aufzunehmen, das durch einen Verbrennungsmotor (1) erwärmt wurde,
wobei das Systemventil (5) eine erste temperaturempfindliche Komponente umfasst, und wobei die Kühlmittelmenge, die dem ersten und dem zweiten Ausgang des Systemventils (5) bereitgestellt wird, durch die Temperatur der ersten temperaturempfindlichen Komponente bestimmt wird,
wobei das Getriebeventil (8) eine zweite temperaturempfindliche Komponente umfasst, wobei das Getriebeventil (8) angeordnet ist, um Kühlmittel an dem ersten und dem zweiten Eingang des Getriebeventils (8) in einem Verhältnis aufzunehmen, das durch die Temperatur der zweiten temperaturempfindlichen Komponente bestimmt wird, und
wobei das Kühlmittel, das aus dem Getriebeölkühler (9) austritt, angeordnet ist, um derart nahe dem Getriebeventil (8) zu fließen, dass die Temperatur der zweiten temperaturempfindlichen Komponente wenigstens teilweise durch die Temperatur des Kühlmittels, das aus dem Getriebeölkühler (9) austritt, gesteuert wird, **dadurch gekennzeichnet, dass** die weitere Motorkomponente eine Fahrzeuginnenraumheizung (7) ist.

2. Getriebewärmetauschsystem nach Anspruch 1, wobei wenigstens eine temperaturempfindliche Komponente ein erstes Material umfasst, das sein Volumen mit der Temperatur ändert, wobei das erste Material angeordnet ist, um den Zustand eines Ventils zu ändern, wenn es sein Volumen ändert.

3. Getriebewärmetauschsystem nach Anspruch 2, wobei das erste Material ein Wachs umfasst.

4. Getriebewärmetauschsystem nach einem der vorhergehenden Ansprüche, wobei das Systemventil (5) derart angeordnet ist, dass das Systemventil (5) verhindern kann, dass Kühlmittel durch den zweiten Ausgang des Systemventils fließt.

5. Getriebewärmetauschsystem nach Anspruch 4, wobei das Systemventil (5) derart angeordnet ist, dass das Systemventil bei einem zuvor bestimmten Temperaturbereich verhindert, dass Kühlmittel durch den zweiten Ausgang des Systemventils fließt.

6. Getriebewärmetauschsystem nach einem der vorhergehenden Ansprüche, wobei das Getriebeventil (8) derart angeordnet ist, dass das Getriebeventil (8) die Kühlmittelflussrate durch den ersten Eingang des Getriebeventils (8) auf ein zuvor bestimmtes Minimum reduzieren kann.

7. Getriebewärmetauschsystem nach einem der vorhergehenden Ansprüche, wobei das Getriebeventil und/oder das Systemventil eine Heizung umfassen.

8. Motor (1), der ein Getriebewärmetauschsystem nach einem der vorhergehenden Ansprüche umfasst.

9. Fahrzeug, das einen Motor nach Anspruch 8 umfasst.

## Revendications

1. Système d'échange de chaleur de transmission destiné à un moteur comprenant :
un refroidisseur d'huile de transmission (9) ;
une pompe (4) ;
une soupape de circuit (5) pour recevoir un fluide de refroidissement, la soupape de circuit (5) comprenant au moins une première entrée, une première sortie et une seconde sortie, la soupape de circuit (5) étant agencée pour recevoir du fluide de refroidissement au niveau de la première entrée de la soupape de circuit et pour fournir ce fluide de refroidissement aux première et seconde sorties de la soupape de circuit, la quantité de fluide de refroidissement fournie aux première et seconde sorties de la soupape de circuit étant en fonction de l'état de la soupape de circuit (5) ; et
une soupape de transmission (8) pour recevoir du fluide de refroidissement, la soupape de transmission (8) comprenant au moins une première entrée, une seconde entrée et une première sortie, la soupape de transmission (8) étant agencée pour recevoir du fluide de refroidissement au niveau des première et seconde entrées de la soupape de transmission (8) selon un rapport en fonction de l'état de la soupape et pour fournir ce fluide de refroidissement à la première sortie de la soupape de transmission (8) ;
dans lequel la pompe (4) est agencée pour fournir du fluide de refroidissement à la première entrée de la soupape de circuit (5) et à la seconde entrée de la soupape de transmission (8), la première sortie de la soupape de circuit (5) étant agencée pour fournir du fluide de refroidissement à la première entrée de la soupape de transmission (8) ; et
dans lequel la première sortie de la soupape de transmission (8) est agencée pour fournir du fluide de refroidissement au refroidisseur d'huile de transmission (9), et la seconde sortie de la soupape de circuit (5) est agencée pour fournir du fluide de refroidissement à un autre composant du moteur,
dans lequel la seconde entrée de la soupape de transmission (8) est agencée pour recevoir du fluide de refroidissement d'un radiateur (3), la pompe (4) étant agencée pour fournir du fluide de refroidissement au radiateur (3),
dans lequel la première entrée de la soupape de circuit (5) est agencée pour recevoir un fluide de refroidissement qui a été chauffé par un moteur à combustion interne (1),
dans lequel la soupape de circuit (5) comprend un premier composant sensible à la température, et dans lequel la quantité de réfrigérant fournie aux première et seconde sorties de la soupape de circuit (5) est déterminée par la température du premier composant sensible à la température,
dans lequel la soupape de transmission (8) comprend un second composant sensible à la température, la soupape de transmission (8) étant agencée pour recevoir le fluide de refroidissement au niveau des première et seconde entrées de la soupape de transmission (8) selon un rapport déterminé par la température du second composant sensible à la température, et
dans lequel le fluide de refroidissement sortant du refroidisseur d'huile de transmission (9) est agencé pour s'écouler à proximité de la soupape de transmission (8), de telle sorte que la température du second composant sensible à la température est au moins partiellement régulée par la température du fluide de refroidissement sortant du refroidisseur d'huile de transmission (9), **caractérisé en ce que** l'autre composant du moteur est un chauffage d'habitacle (7).

2. Système d'échange de chaleur de transmission selon la revendication 1, dans lequel au moins un composant sensible à la température comprend un premier matériau qui change de volume avec la température, le premier matériau étant agencé pour changer l'état d'une soupape lorsqu'elle change de volume.

3. Système d'échange de chaleur de transmission selon la revendication 2, dans lequel le premier matériau comprend une cire.

4. Système d'échange de chaleur de transmission selon l'une quelconque des revendications précédentes, dans lequel la soupape de circuit (5) est agencée de telle sorte que la soupape de circuit (5) peut empêcher le fluide de refroidissement de s'écouler à travers la seconde sortie de la soupape de circuit.

5. Système d'échange de chaleur de transmission selon la revendication 4, dans lequel la soupape de circuit (5) est agencée de telle sorte que la soupape de circuit empêchera le fluide de refroidissement de s'écouler à travers la seconde sortie de la soupape de circuit à une plage de températures prédéterminée.

6. Système d'échange de chaleur de transmission selon l'une quelconque des revendications précédentes, dans lequel la soupape de transmission (8) est agencée de telle sorte que la soupape de transmission (8) peut réduire le débit de fluide de refroidissement à travers la première entrée de la soupape de transmission (8) à un débit minimal prédéterminé.

7. Système d'échange de chaleur de transmission selon l'une quelconque des revendications précédentes, dans lequel la soupape de transmission et/ou la soupape de circuit comprennent un réchauffeur.

8. Moteur (1) comprenant un système d'échange de chaleur de transmission selon l'une quelconque des revendications précédentes.

9. Véhicule comprenant un moteur selon la revendication 8.
